# EUROPEAN PATENT APPLICATION

(11) **EP 4 772 456 A1**
(43) Date of publication of application: **08.07.2026**
(21) Application number: 25837948.6
(22) Date of filing: 10.04.2025
(51) Int. Cl.: B65G 1/04

(54) **PALLET LIFTING DEVICE FOR SHUTTLE, AND WORKING METHOD**

(30) Priority: 18.11.2024 CN 202411644831
(71) Applicant: SHANGHAI ZS ROBOTICS CO., LTD, Shanghai 201111 (CN)
(72) Inventor: CUI, Lei, Shanghai 201111 (CN); LUO, Qiang, Shanghai 201111 (CN)
(74) Representative: Paustian & Partner Patentanwälte mbB
(86) International application number: PCT/CN2025/088270
(87) International publication number: WO 2026/103010

(57) **Abstract**

A pallet lifting device for a shuttle vehicle including a shuttle vehicle and a pallet and a working method of the pallet lifting device are provided. Lifting plates are disposed on an upper part of the shuttle vehicle, and a driving device on the shuttle vehicle drives the lifting plates to perform lifting movement. Several support feet are disposed at the bottom of the pallet, and one of the several support feet close to a center of the pallet is marked as an anti-deviation foot. A front clamping claw and a rear clamping claw are disposed on the shuttle vehicle along a traveling direction. The front clamping claw and the rear clamping claw are linked and connected to the lifting plates via linkage structures. The pallet is placed on the lifting plates, so that the front clamping claw and the rear clamping claw get close to each other while performing upward movement under the transmission of the linkage structures, and are located on front and rear sides of the anti-deviation foot in the traveling direction. The front clamping claw and the rear clamping claw limit sliding between the anti-deviation foot of the pallet and the lifting plate of the shuttle vehicle and limit deviation of the pallet after upright posts of a goods shelf are scratched by goods. A front guide notch and a rear guide notch are disposed on the front clamping claw and the rear clamping claw, thus eliminating placement errors of the pallet and stop errors of the shuttle vehicle.

## Description

### TECHNICAL FIELD

The present disclosure relates to the field of intelligent three-dimensional storage, and more specifically to a pallet lifting device for a shuttle vehicle and a working method thereof.

### BACKGROUND

When a two-way or four-way shuttle vehicle used in three-dimensional storage transports and stores pallet type goods, risks such as dumping of goods on a pallet caused by deviation of the pallet, scratching on upright posts of a goods shelf may occur due to track errors of the goods shelf, start and stop of the shuttle vehicle, and the like. In the prior art, anti-skid processing is performed on a top lifting support plate of the shuttle vehicle, so as to reduce pallet deviation. Alternatively, multiple groups of photoelectric sensors are arranged to detect the position of the pallet. However, the pallet still needs to be manually corrected, which affects the working efficiency of the three-dimensional storage and increases manual costs.

### SUMMARY

Technical Problems: to overcome shortages in the prior art, the present disclosure provides a pallet lifting device for a shuttle vehicle and a working method of the pallet lifting device. A front claw and a rear claw are respectively disposed on front and rear sides of a pallet anti-deviation foot, which is able to effectively limit sliding between the pallet anti-deviation foot and a lifting plate of the shuttle vehicle, and is also able to prevent deviation of the pallet after upright posts of a goods shelf are scratched in a goods transportation process. A front guide notch and a rear guide notch are disposed on the front claw and the rear claw, which is able to effectively eliminate placement errors of the pallet and stop errors of the shuttle vehicle.

Technical Solutions: to achieve the above objective, a pallet lifting device for a shuttle vehicle and a working method of the pallet lifting device are provided in the present disclosure. A pallet lifting device for a shuttle vehicle includes a shuttle vehicle and a pallet. Lifting plates are disposed on an upper part of the shuttle vehicle, and a driving device on the shuttle vehicle drives the lifting plates to perform lifting movement. Several support feet are disposed at a bottom of the pallet, and one of the several support feet close to a center of the pallet is marked as an anti-deviation foot. A front clamping claw and a rear clamping claw are disposed forth and back on the shuttle vehicle along a traveling direction, the front clamping claw and the rear clamping claw are linked and connected to each of the lifting plates via linkage structures, and in a state that the pallet is horizontally placed on the lifting plates, lifting actions of the lifting plates enable the front clamping claw and the rear clamping claw to get close to each other while performing upward movement under a transmission of the linkage structures, and be located on a front side and a rear side of the anti-deviation foot in the traveling direction.

In an embodiment, each of the linkage structures includes a fixed block, a driving rod A, a driving rod B, a driving block, a connecting rod A, a connecting rod B, a connecting rod C, and a connecting rod D. The fixed block is fixedly mounted inside the shuttle vehicle, an upper end of the driving block is fixedly connected to a lower end of the lifting plate. One end of the driving rod A and one end of the driving rod B are hinged to a front side and a rear side of the driving block via a front hinge and a rear hinge, respectively. An other end of the driving rod A and an other end of the driving rod B are hinged to a lower end of the front claw and a lower end of the rear claw via a first lower hinge and a second lower hinge, respectively. The driving rod A and the driving rod B are symmetrically disposed forth and back relative to the diving block.

One end of the connecting rod A, one end of the connecting rod B, one end of the connecting rod C, and one end of the connecting rod D are hinged to a front side and a rear side of the fixing block via a hinge A, a hinge B, a hinge C, and a hinge D, respectively. An other end of the connecting rod A and an other end of the connecting rod C are hinged to the lower end of the front claw and the lower end of the rear claw via a first upper hinge and a second upper hinge, respectively. An other end of the connecting rod B and an other end of the connecting rod D are hinged at the lower end of the front claw and the lower end of the rear claw together with the driving rod A and the driving rod B via the first lower hinge and the second lower hinge, respectively. The first upper hinge and the second upper hinge are respectively located above the first lower hinge and the second lower hinge. The connecting rod A and the connecting rod B are symmetrically disposed forth and back with respect to the hinge C and the hinge D relative to the fixed block.

In an embodiment, two mounting plates are symmetrically disposed on both sides inside the shuttle vehicle along the traveling direction, the two mounting plates are located below the lifting plates. One side of the fixed block along a length direction is fixed on each of the two mounting plates. An upper surface of the driving block is fixedly connected to a center of a lower surface of the lifting plate.

In an embodiment, the first upper hinge, the first lower hinge, the hinge A, and the hinge B form four end points of a parallelogram, and connecting lines between the four end points form a first parallelogram. A connecting line between the first upper hinge and the first lower hinge is represented by L1, a connecting line between the hinge A and the hinge B is represented by L2, a connecting line between the first upper hinge and the hinge A is represented by L3, a connecting line between the first lower hinge and the hinge B is represented by L4. In a process of driving the front clamping claw and the rear clamping claw to move synchronously by the driving block, L1 is parallel to L2, and L3 is parallel to L4.

In an embodiment, the second upper hinge, the second lower hinge, the hinge C, and the hinge D form four end points of a parallelogram, and connecting lines between the four end points form a second parallelogram. A connecting line between the second upper hinge and the second lower hinge is represented by L5, a connecting line between the hinge C and the hinge D is represented by L6, a connecting line between the second upper hinge and the hinge C is represented by L7, a connecting line between the second lower hinge and the hinge D is represented by L8. In a process of driving the front clamping claw and the rear clamping claw to move synchronously by the driving block, L1 is parallel to L2, L3 is parallel to L4, and the first parallelogram and the second parallelogram are symmetrically disposed relative to the fixed block.

In an embodiment, the hinge B, the hinge D, the front hinge, the rear hinge, the first lower hinge, and the second lower hinge form six end points of a hexagon, connecting lines between the six end points form a first hexagon, and the linkage mechanism drives the front claw and the rear claw to get close to each other and simultaneously move upward relative to the fixed block by means of a linkage relation among the first parallelogram, the second parallelogram, and the first hexagon.

In an embodiment, a front guide notch and a rear guide notch are respectively disposed at upper ends of mutual approaching sides of the front claw and the rear claw, and shapes of the front guide notch and the rear guide notch are both horn-shaped.

In an embodiment, a front through slot and a rear through slot are respectively formed in the lifting plate along the traveling direction, an upper end of the front claw and an upper end of the rear claw are respectively corresponding to the front through slot and the rear through slot. The front clamping claw and the rear clamping claw respectively pass through the front through slot and the rear through slot upward in a process that the front clamping claw and the rear clamping claw get close to each other while performing upward movement under the transmission of the linkage structures.

In an embodiment, in an initial state, several pallets are racked on a goods shelf, goods are placed on each of the pallets, and when the lifting plate is in a non-lifting state, an upper end of the front claw and an upper end of the rear claw are both lower than a lower end of the anti-deviation foot, so that the shuttle vehicle moves on a guide rail and is capable of smoothly shuttling below the pallets.

In an embodiment, in an initial state, when the shuttle vehicle moves along a guide rail to a position below any pallet, the lifting plates perform lifting movement driven by a driving device of the shuttle vehicle. The driving block moves with the lifting movement of the lifting plate, and is capable of vertically move upward relative to a fixed block; and in a process of vertical upward movement of the driving block, the linkage mechanism drives the front claw and the rear claw to get close to each other and synchronously move upward relative to the fixed block by means of a linkage relation among a first parallelogram, a second parallelogram, and a first hexagon. In this process, an upper end of the front claw and an upper end of the rear claw respectively pass through a corresponding front through slot and a corresponding rear through slot upward. When the lifting movement of the lifting plate is stopped, the upper end of the front claw and the upper end of the rear claw protrude out of an upper surface of the lifting plate and are respectively located on the front side and the rear side of the anti-deviation foot in the traveling direction, limiting the anti-deviation foot.

Beneficial Effects: according to the pallet lifting device for a shuttle vehicle and the working method of the pallet lifting device in the present disclosure, a front claw and a rear claw are respectively disposed on front and rear sides of a pallet anti-deviation leg, which can effectively limit sliding between the pallet anti-deviation foot and a lifting plate of the shuttle vehicle, and also can prevent deviation of the pallet after upright posts of a goods shelf are scratched in a goods transportation process. A front guide notch and a rear guide notch are disposed on the front claw and the rear claw, which can effectively eliminate placement errors of the pallet and stop errors of the shuttle vehicle.

### BRIEF DESCRIPTION OF THE DRAWINGS

FIG. 1 is an installation schematic diagram of a pallet lifting device for a shuttle vehicle installed on the shuttle vehicle according to an embodiment of the present disclosure;
FIG. 2 is a structural schematic diagram of a pallet lifting device for a shuttle vehicle according to an embodiment of the present disclosure;
FIG. 3 is a positional schematic diagram of a lifting plate between a shuttle vehicle and a pallet in a non-lifting state;
FIG. 4 is an enlarged structural diagram of area A;
FIG. 5 is a positional schematic diagram of a lifting plate between a shuttle vehicle and a pallet in a lifting state; and
FIG. 6 is an enlarged structural diagram of area B.

### DETAILED DESCRIPTION OF THE EMBODIMENTS

The present disclosure is further described below in combination with the attached figures.

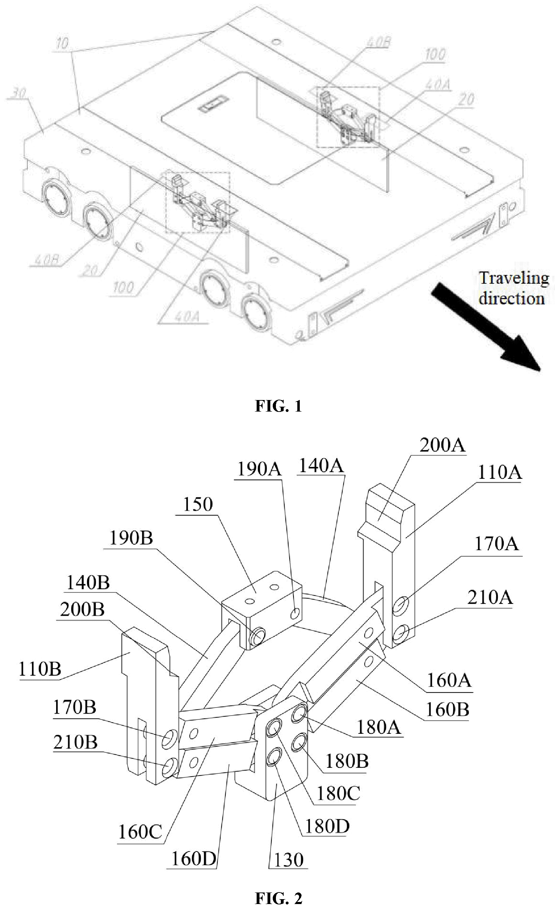

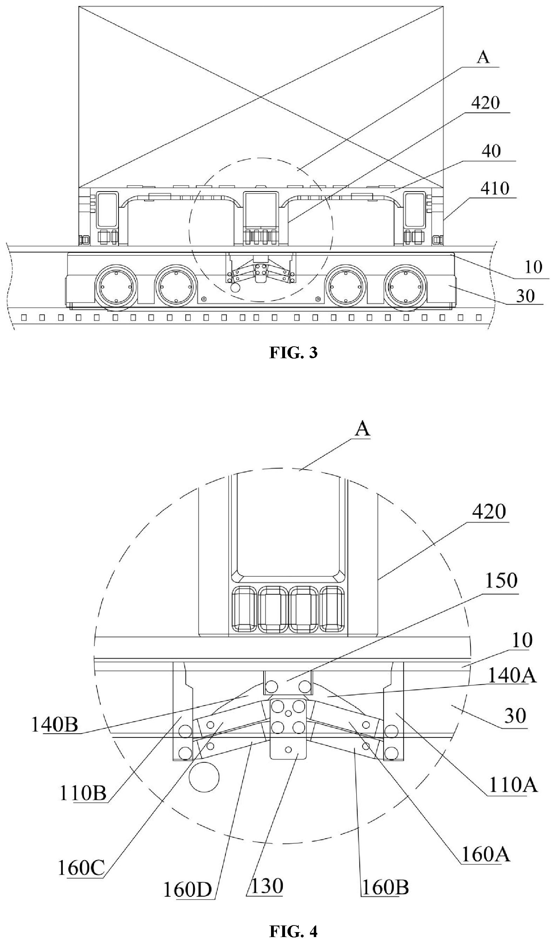

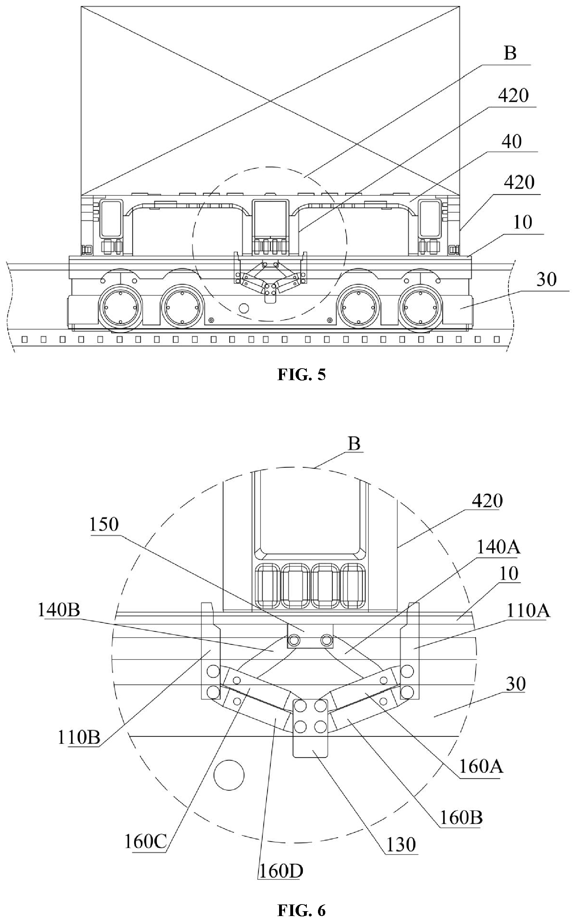

As shown in FIG. 1 to FIG. 6, a pallet lifting device for a shuttle vehicle and a working method of the pallet lifting device are provided. The pallet lifting device for a shuttle vehicle includes a shuttle vehicle 30 and a pallet 40. The pallet 40 is detachably placed on an upper end of the shuttle vehicle 30. Lifting plates 10 are disposed on an upper part of the shuttle vehicle 30, and a driving device on the shuttle vehicle 30 drives the lifting plates 10 to perform lifting movement. When the lifting plates 10 are in a non-lifting state, lower surfaces of the lifting plates 10 make contact with an upper surface of the shuttle vehicle 30. A plurality of support feet 410 are disposed at the bottom of the pallet 40, and one of the plurality of support feet 410 close to a center of the pallet 40 is marked as an anti-deviation foot 420. A front clamping claw 110A and a rear clamping claw 110B are disposed forth and back on the shuttle vehicle 30 along a traveling direction. The front clamping claw 110A and the rear clamping claw 110B are linked and connected to the lifting plates 10 via linkage structures 100. In a state that the pallet 40 is horizontally placed on the lifting plates 10, lifting actions of the lifting plates 10 make the front clamping claw 110A and the rear clamping claw 110B to get close to each other while performing upward movement under the transmission of the linkage structures 100, and are on front and rear sides of the anti-deviation foot 420 in the traveling direction. Alternatively, the front clamping claw 110A and the rear clamping claw 110B get close to each other while performing upward movement under the transmission of the linkage structures 100. Moreover, sides of the front clamping claw 110A and the rear clamping claw 110B getting close to each other are respectively pressed against front and rear sides of the anti-deviation foot 420. When the shuttle vehicle 30 moves along the traveling direction with the pellet and the front clamping claw 110A and the rear clamping claw 110B are on the front and rear sides of the anti-deviation foot 420 in the traveling direction, the anti-deviation foot 420 slides within a range between the front clamping claw 110A and the rear clamping claw 110B. Finally, one side of the anti-deviation foot 420 is pressed against the front clamping claw 110A or the rear clamping claw 110B.

The linkage structure 100 includes a fixed block 130, a driving rod A 140A, a driving rod B 140B, a driving block 150, a connecting rod A 160A, a connecting rod B 160B, a connecting rod C 160C, and a connecting rod D 160D. The fixed block 130 is fixedly mounted inside the shuttle vehicle 30. An upper end of the driving block 150 is fixedly connected to a lower end of the lifting plate 10. When the lifting plates 10 perform lifting movement driven by the driving device, the driving block 150 vertically moves upward relative to the fixed block 130 together with the lifting movement of the lifting plates 10. One end of the driving rod A 140A and one end of the driving rod B 140B are hinged to front and rear sides of the driving block 150 via a front hinge 190A and a rear hinge 190B, respectively; and the other end of the driving rod A 140A and the other end of the driving rod B 140B are hinged to a lower end of the front claw 110A and a lower end of the rear claw 110B via a first lower hinge 210A and a second lower hinge 210B, respectively. The driving rod A 140A and the driving rod B 140B are symmetrically disposed forth and back relative to the diving block 150. One end of the connecting rod A 160A, one end of the connecting rod B 160B, one end of the connecting rod C 160C, and one end of the connecting rod D 160D are hinged to front and rear sides of the fixing block 130 via a hinge A 180A, a hinge B 180B, a hinge C 180C, and a hinge D 180D, respectively. The other end of the connecting rod A 160A and the other end of the connecting rod C 160C are hinged to a lower end of the front claw 110A and a lower end of the rear claw 110B via a first upper hinge 170A and a second upper hinge 170B, respectively. The other end of the connecting rod B 160B and the other end of the connecting rod D 160D are hinged at the lower end of the front claw 110A and the lower end of the rear claw 110B together with the driving rod A 140A and the driving rod B 140B via the first lower hinge 210A and the second lower hinge 210B, respectively. The first upper hinge 170A and the second upper hinge 170B are respectively located above the first lower hinge 210A and the second lower hinge 210B. The connecting rod A 160A and the connecting rod B 160B are symmetrically disposed forth and back with respect to the hinge C 180C and the hinge D 180D relative to the fixed block 130. Under the combined action of the connecting rod A 160A and the connecting rod B 160B, the front claw 110A is always perpendicular to the lifting plates 10 in the process that the driving block 150 vertically moves upward relative to the fixed block 130. Under the combined action of the connecting rod C 160C and the connecting rod D 160D, the rear claw 110B is always perpendicular to the lifting plates 10 in the process that the driving block 150 vertically moves upward relative to the fixed block 130.

The first upper hinge 170A, the first lower hinge 170B, the hinge A 180A, and the hinge B 180B form four end points of a parallelogram. Connecting lines between the four end points form a first parallelogram. It is assumed that a connecting line between the first upper hinge 170A and the first lower hinge 210A is represented by L1, a connecting line between the hinge A 180A and the hinge B 180B is represented by L2, a connecting line between the first upper hinge 170A and the hinge A 180A is represented by L3, and a connecting line between the first lower hinge 210A and the hinge B 180B is represented by L4. In the process of driving the front clamping claw 110A and the rear clamping claw 110B to move synchronously by the driving block 150, L1 is always parallel to L2, and L3 is always parallel to L4.

The second upper hinge 170B, the second lower hinge 210B, the hinge C 180C, and the hinge D 180D form four end points of a parallelogram. Connecting lines between the four end points form a second parallelogram. It is assumed that a connecting line between the second upper hinge 170B and the second lower hinge 210B is represented by L5, a connecting line between the hinge C 180C and the hinge D 180D is represented by L6, a connecting line between the second upper hinge 170B and the hinge C 180C is represented by L7, and a connecting line between the second lower hinge 210B and the hinge D 180D is represented by L8. In the process of driving the front clamping claw 110A and the rear clamping claw 110B to move synchronously by the driving block 150, L1 is always parallel to L2, and L3 is always parallel to L4. The first parallelogram and the second parallelogram are symmetrically disposed relative to the fixed block 130.

The hinge B 180B, the hinge D 180D, the front hinge 190A, the rear hinge 190B, the first lower hinge 210A, and the second lower hinge 210B form six end points of a hexagon. Connecting lines between the six end points form a first hexagon. The linkage mechanism 100 drives the front claw 110A and the rear claw 110B to get close to each other and simultaneously move upward relative to the fixed block 130 by means of a linkage relation among the first parallelogram, the second parallelogram, and the first hexagon.

Two mounting plates 20 are symmetrically disposed on both sides inside the shuttle vehicle 30 along the traveling direction. The mounting plate 20 is located below the lifting plate 10, and is fixedly connected to a vehicle body at an end point of the shuttle vehicle 30. One side of the fixed block 150 along a length direction is fixed on the mounting plate 20. An upper surface of the driving block 150 is fixedly connected to a center of a lower surface of the lifting plate 10. When the lifting plates 10 perform lifting movement when driven by the driving device of the shuttle vehicle 30, the driving block 150 moves with the lifting movement of the lifting plates 10, and can vertically move upward relative to the fixed block 130.

A front guide notch 200A and a rear guide notch 200B are respectively disposed at upper ends of the mutual approaching sides of the front claw 110A and the rear claw 110B. A shape of the front guide notch 200A and the rear guide notch 200B is horn-shaped. When the pallet 40 is placed on a goods shelf, it cannot be completely ensured that the pallet 40 is located in a perfect center of the goods shelf, and when the shuttle vehicle 30 needs to stop traveling under the pallet 40, it cannot be completely ensured that the anti-deviation foot 420 on the pallet 40 is just located in a central region on an upper surface of the shuttle vehicle 30. Therefore, when the lifting plates 10 perform lifting movement when driven by the driving device of the shuttle vehicle 30, the front claw 110A and the rear claw 110B get close to each other and simultaneously move upward relative to the fixed block 130 until upper ends of the front claw 110A and the rear claw 110B respectively pass through a corresponding front through slot 40A and a corresponding rear through slot 40B upward. In this case, the front guide notch 200A at an upper end of the front claw 110A plays a role in guiding a front side the anti-deviation foot 420, and exerts a force close to the rear claw 110B on the front side of the anti-deviation foot 420, so that the anti-deviation foot 420 moves toward the rear claw 110B. Alternatively, the rear guide notch 200B at an upper end of the rear claw 110B plays a role in guiding a rear side of the anti-deviation foot 420, and exerts a force close to the front claw 110A on the rear side of the anti-deviation foot 420, so that the anti-deviation foot 420 moves toward the front claw 110A, and finally the front clamping claw 110A and the rear clamping claw 110B are on front and rear sides of the anti-deviation foot 420 in the traveling direction, so that the anti-deviation foot 420 slides within a range between the front clamping claw 110A and the rear clamping claw 110B. Alternatively, mutual approaching sides of the front clamping claw 110A and the rear clamping claw 110B are pressed against front and rear sides of the anti-deviation foot 420 in the traveling direction, clamping the anti-deviation foot 420 while limiting the anti-deviation foot 420.

The front through slot 40A and the rear through slot 40B are respectively formed in the lifting plate 10 along the traveling direction. Upper ends of the front claw 110A and the rear claw 110B are respectively corresponding to the front through slot 40A and the rear through slot 40B. The front clamping claw 110A and the rear clamping claw 110B respectively pass through the front through slot 40A and the rear through slot 40B upward in the process that the front clamping claw 110A and the rear clamping claw 110B get close to each other while performing upward movement under the transmission of the linkage structures 100.

In an initial state, several pallets 40 are racked on the goods shelf, and goods are placed on each of the pallets 40. When the lifting plate 10 is in a non-lifting state, an upper end of the front claw 110A and an upper end of the rear claw 110B are both lower than a lower end of the anti-deviation foot 420, so that the shuttle vehicle 30 moves on a guide rail, and can smoothly shuttle below the pallets 40.

According to a working method of the pallet lifting device for a shuttle vehicle, in an initial state, when the shuttle vehicle 30 moves along a guide rail to a lower part of any pallet 40, the lifting plates 10 perform lifting movement when driven by a driving device of the shuttle vehicle 30, the driving block 150 moves with the lifting movement of the lifting plate 10, and can vertically move upward relative to a fixed block 130. In the process of vertical upward movement of the driving block 150, the linkage mechanism 100 drives the front claw 110A and the rear claw 110B to get close to each other and synchronously move upward relative to the fixed block 130 by means of a linkage relation among a first parallelogram, a second parallelogram, and a first hexagon. In this process, upper ends of the front claw 110A and the rear claw 110B respectively pass through a corresponding front through slot 40A and a corresponding rear through slot 40B upward. When the lifting movement of the lifting plate 10 is stopped, upper ends of the front claw 110A and the rear claw 110B protrude out of an upper surface of the lifting plate 10 and are respectively located on front and rear sides of the anti-deviation foot 420 in the traveling direction, so as to limit the anti-deviation foot 420.

Alternatively, the linkage mechanism 100 drives the front claw 110A and the rear claw 110B to get close to each other and synchronously move upward relative to the fixed block 130 by means of a linkage relation among a first parallelogram, a second parallelogram, and a first hexagon until upper ends of the front claw 110A and the rear claw 110B respectively pass through a corresponding front through slot 40A and a corresponding rear through slot 40B upward. Upper ends of the front claw 110A and the rear claw 110B protrude out of an upper surface of the lifting plate 10, and mutual approaching sides of an upper end of the front claw 110A and an upper end of the rear claw 110B are respectively pressed against front and rear sides of the anti-deviation foot 420, clamping the anti-deviation foot 420 while limiting the anti-deviation foot 420.

The above represents preferred implementations of the present disclosure. It should be noted that for those skilled in the art, several improvements or embellishments can be made without departing from the principle of the present disclosure. and these improvements or embellishments should also be regarded as within the protection scope of the present disclosure.

## Claims

1. A pallet lifting device for a shuttle vehicle, comprising a shuttle vehicle (30) and a pallet (40), wherein lifting plates (10) are disposed on an upper part of the shuttle vehicle (30), and a driving device on the shuttle vehicle (30) drives the lifting plates (10) to perform lifting movement; a plurality of support feet (410) are disposed at a bottom of the pallet (40), and one of the plurality of support feet (410) close to a center of the pallet (40) is marked as an anti-deviation foot (420); and a front clamping claw (110A) and a rear clamping claw (110B) are disposed forth and back on the shuttle vehicle (30) along a traveling direction; the front clamping claw (110A) and the rear clamping claw (110B) are linked and connected to each of the lifting plates (10) via linkage structures (100); and in a state that the pallet (40) is horizontally placed on the lifting plates (10), lifting actions of the lifting plates (10) enable the front clamping claw (110A) and the rear clamping claw (110B) to get close to each other while performing upward movement under a transmission of the linkage structures (100), and be located on a front side and a rear side of the anti-deviation foot (420) in the traveling direction.

2. The pallet lifting device for a shuttle vehicle according to claim 1, wherein each of the linkage structures (100) comprises a fixed block (130), a driving rod A (140A), a driving rod B (140B), a driving block (150), a connecting rod A (160A), a connecting rod B (160B), a connecting rod C (160C), and a connecting rod D (160D); the fixed block (130) is fixedly mounted inside the shuttle vehicle (30), an upper end of the driving block (150) is fixedly connected to a lower end of the lifting plate (10); one end of the driving rod A (140A) and one end of the driving rod B (140B) are hinged to a front side and a rear side of the driving block (150) via a front hinge (190A) and a rear hinge (190B), respectively; an other end of the driving rod A (140A) and an other end of the driving rod B (140B) are hinged to a lower end of the front claw (110A) and a lower end of the rear claw (110B) via a first lower hinge (210A) and a second lower hinge (210B), respectively; and the driving rod A (140A) and the driving rod B (140B) are symmetrically disposed forth and back relative to the diving block (150); and
one end of the connecting rod A (160A), one end of the connecting rod B (160B), one end of the connecting rod C (160C), and one end of the connecting rod D (160D) are hinged to a front side and a rear side of the fixing block (130) via a hinge A (180A), a hinge B (180B), a hinge C (180C), and a hinge D (180D), respectively; an other end of the connecting rod A (160A) and an other end of the connecting rod C (160C) are hinged to the lower end of the front claw (110A) and the lower end of the rear claw (110B) via a first upper hinge (170A) and a second upper hinge (170B), respectively; an other end of the connecting rod B (160B) and an other end of the connecting rod D (160D) are hinged at the lower end of the front claw (110A) and the lower end of the rear claw (110B) together with the driving rod A (140A) and the driving rod B (140B) via the first lower hinge (210A) and the second lower hinge (210B), respectively; the first upper hinge (170A) and the second upper hinge (170B) are respectively located above the first lower hinge (210A) and the second lower hinge (210B); and the connecting rod A (160A) and the connecting rod B (160B) are symmetrically disposed forth and back with respect to the hinge C (180C) and the hinge D (180D) relative to the fixed block (130).

3. The pallet lifting device for a shuttle vehicle according to claim 1, wherein two mounting plates (20) are symmetrically disposed on both sides inside the shuttle vehicle (30) along the traveling direction, the two mounting plates (20) are located below the lifting plates (10); one side of the fixed block (150) along a length direction is fixed on each of the two mounting plates (20); and an upper surface of the driving block (150) is fixedly connected to a center of a lower surface of the lifting plate (10).

4. The pallet lifting device for a shuttle vehicle according to claim 2, wherein the first upper hinge (170A), the first lower hinge (170B), the hinge A (180A), and the hinge B (180B) form four end points of a parallelogram, connecting lines between the four end points form a first parallelogram; a connecting line between the first upper hinge (170A) and the first lower hinge (210A) is represented by L1, a connecting line between the hinge A (180A) and the hinge B (180B) is represented by L2, a connecting line between the first upper hinge (170A) and the hinge A (180A) is represented by L3, a connecting line between the first lower hinge (210A) and the hinge B (180B) is represented by L4; and in a process of driving the front clamping claw (110A) and the rear clamping claw (110B) to move synchronously by the driving block (150), L1 is parallel to L2, and L3 is parallel to L4.

5. The pallet lifting device for a shuttle vehicle according to claim 2, wherein the second upper hinge (170B), the second lower hinge (210B), the hinge C (180C), and the hinge D (180D) form four end points of a parallelogram, connecting lines between the four end points form a second parallelogram; a connecting line between the second upper hinge (170B) and the second lower hinge (210B) is represented by L5, a connecting line between the hinge C (180C) and the hinge D (180D) is represented by L6, a connecting line between the second upper hinge (170B) and the hinge C (180C) is represented by L7, a connecting line between the second lower hinge (210B) and the hinge D (180D) is represented by L8; and in a process of driving the front clamping claw (110A) and the rear clamping claw (110B) to move synchronously by the driving block (150), L1 is parallel to L2, L3 is parallel to L4, and the first parallelogram and the second parallelogram are symmetrically disposed relative to the fixed block (130).

6. The pallet lifting device for a shuttle vehicle according to claim 2, wherein the hinge B (180B), the hinge D (180D), the front hinge (190A), the rear hinge (190B), the first lower hinge (210A), and the second lower hinge (210B) form six end points of a hexagon, connecting lines between the six end points form a first hexagon; and the linkage mechanism (100) drives the front claw (110A) and the rear claw (110B) to get close to each other and simultaneously move upward relative to the fixed block (130) by means of a linkage relation among the first parallelogram, the second parallelogram, and the first hexagon.

7. The pallet lifting device for a shuttle vehicle according to claim 1, wherein a front guide notch (200A) and a rear guide notch (200B) are respectively disposed at upper ends of mutual approaching sides of the front claw (110A) and the rear claw (110B); and shapes of the front guide notch (200A) and the rear guide notch (200B) are both horn-shaped.

8. The pallet lifting device for a shuttle vehicle according to claim 1, wherein a front through slot (40A) and a rear through slot (40B) are respectively formed in the lifting plate (10) along the traveling direction; an upper end of the front claw (110A) and an upper end of the rear claw (110B) are respectively corresponding to the front through slot (40A) and the rear through slot (40B); and the front clamping claw (110A) and the rear clamping claw (110B) respectively pass through the front through slot (40A) and the rear through slot (40B) upward in a process that the front clamping claw (110A) and the rear clamping claw (110B) get close to each other while performing upward movement under the transmission of the linkage structures (100).

9. The pallet lifting device for a shuttle vehicle according to claim 1, wherein in an initial state, a plurality of pallets (40) are racked on a goods shelf, goods are placed on each of the pallets (40), and when the lifting plate (10) is in a non-lifting state, an upper end of the front claw (110A) and an upper end of the rear claw (110B) are both lower than a lower end of the anti-deviation foot (420), so that the shuttle vehicle (30) moves on a guide rail and is capable of smoothly shuttling below the pallets (40).

10. A working method of the pallet lifting device for a shuttle vehicle according to claim 1, wherein in an initial state, when the shuttle vehicle (30) moves along a guide rail to a position below any pallet (40), the lifting plates (10) perform lifting movement driven by a driving device of the shuttle vehicle (30); the driving block (150) moves with the lifting movement of the lifting plate (10) and is capable of vertically move upward relative to a fixed block (130); and in a process of vertical upward movement of the driving block (150), the linkage mechanism (100) drives the front claw (110A) and the rear claw (110B) to get close to each other and synchronously move upward relative to the fixed block (130) by means of a linkage relation among a first parallelogram, a second parallelogram, and a first hexagon; in this process, an upper end of the front claw (110A) and an upper end of the rear claw (110B) respectively pass through a corresponding front through slot (40A) and a corresponding rear through slot (40B) upward; and when the lifting movement of the lifting plate (10) is stopped, the upper end of the front claw (110A) and the upper end of the rear claw (110B) protrude out of an upper surface of the lifting plate (10) and are respectively located on the front side and the rear side of the anti-deviation foot (420) in the traveling direction, limiting the anti-deviation foot (420).
